# EUROPÄISCHE PATENTSCHRIFT

(11) **EP 0 754 612 B1**
(45) Veröffentlichungstag und Bekanntmachung des Hinweises auf die Patenterteilung: **04.10.2001**
(21) Anmeldenummer: 96110770.3
(22) Anmeldetag: 03.07.1996
(51) Int. Cl.: B62B 7/14

(54) **Kinderwagen, insbesondere zusammenklapp- oder -faltbarer Kindersportwagen**
Collapsible or foldable perambulator
Voiture d'enfant repliable

(30) Priorität: 18.07.1995 DE 19526180
(43) Veröffentlichungstag der Anmeldung: 22.01.1997
(73) Patentinhaber: HAUCK GmbH & Co. KG, 96242 Sonnefeld (DE)
(72) Erfinder: Feyler, Klaus, 96242 Sonnefeld (DE)
(74) Vertreter: Popp, Eugen, Dr.

(56) Entgegenhaltungen:
- AU-B- 613 668
- GB-A- 2 268 394
- US-A- 4 634 177
- US-A- 5 133 567

## Beschreibung

Die Erfindung betrifft einen Kinderwagen gemäß dem Oberbegriff des Anspruches 1.

Ein derartiger Kinderwagen ist bekannt z.B. aus der DE 38 30 752 C2 oder DE 35 32 594 C2 oder auch DE 37 09 712 A1. Diese Kinderwagen sind jeweils durch ein zusammenklappbares Fahrgestell gekennzeichnet, welches aus in zwei parallelen senkrechten Ebenen aneinander angelenkten, zum Teil scherenartig angeordneten Gestellholmen und einem U-förmigen Griffbügel besteht, wobei entsprechende Gestellholme der beiden Ebenen jeweils ein Paar bilden, und mit einem Aufsatz, der eine Sitzfläche und eine Rükkenlehne aufweist. Des weiteren weisen sämtliche bekannten Kinderwagen an jeder Seite einen sich in der Regel schräg von hinten oben nach vorne unten erstreckenden Gestellholm auf, der jeweils die obere Begrenzung des Fahrgestells an den beiden Seiten des Kinderwagens definiert.

Aus der GB-A-2 268 394 ist ein Kinderwagen mit austauschbaren Befestigungseinrichtungen bekannt. Der mit einem Griffbügel ausgestattete Kindersitz kann in einen Rahmen mit Gestellholmen und mit Stützlagern eingesetzt werden, wobei aber die Stützlager fest und unlösbar mit den Gestellholmen verbunden sind. Bei dieser bekannten Konstruktion besteht somit nicht die Möglichkeit, durch einfaches Absetzen des Kindersitzes diesen am Kinderwagen anzubringen. Das Anbringen des Kindersitzes an dem Gestell bzw. Kinderwagen ist hierbei vergleichsweise aufwendig und umständlich.

Des weiteren sind ganz allgemein Kindertragschalen bekannt, die einen Tragbügel umfassen, dessen Schenkel seitlich an der Tragschale angelenkt sind, derart, daß der Tragbügel aus einer etwa vertikalen Tragstellung in eine Bodenstützstellung und umgekehrt sowie gegebenenfalls weitere Zwischenstellungen verschwenkbar ist. Diesbezüglich wird beispielhaft auf die US-A 4 986 599 oder US-A 5 011 221 verwiesen. Diese bekannten Kindertragschalen, deren Sitz- und Liegeseite eine Polsterung umfaßt, dienen auch als Kindersitz. Zu diesem Zweck werden sie nach europäischen Vorschriften mittels der im Kraftfahrzeug vorhandenen Sitzgurte in der Regel auf dem Rücksitz des

Kraftfahrzeuges verankert, und zwar meist so, daß die Rückenlehne nach vorne gerichtet ist, d.h. das in der Tragschale liegende oder sitzende Kind nach hinten blickt.

Der vorliegenden Erfindung liegt nun die Aufgabe zugrunde, einen Kinderwagen der eingangs genannten Art bereitzustellen, der so konzipiert ist, daß er sich für die Aufnahme einer Kindertragschale eignet, so daß die Kindertragschale auf dem Kinderwagen plazierbar und das Kind in der Kindertragschale mit dem Kinderwagen bewegbar ist, wobei die Kindertragschale am Kinderwagen ohne großen Aufwand anbringbar ist. Die Einheit "Kindertragschale/Kind" soll also unverändert beibehalten werden, gleichgültig, ob das Kind im Kraftfahrzeug oder mit dem Kinderwagen transportiert oder mit den Händen getragen wird.

Diese Aufgabe wird erfindungsgemäß durch die im Anspruch 1 aufgeführten Merkmale gelöst. Bervorzugte Ausführungsformen werden durch die in den abhängigen Ansprüchen aufgeführten Merkmale erhalten.

Bei der erfindungsgemäßen Konstruktion sind an den Gestellholmen jeder Seite jeweils ein Stützlager für eine Kindertragschale lösbar angeschlossen, insbesondere einhak- und verrastbar, wobei das Stützlager ein auf einem Gestellholm aufsetzbares Bauteil mit einer im montierten Zustand nach oben hin offenen, etwa halbkreisförmigen Lagerschale ist. Damit ist es auch möglich, die Stützlager vom Kinderwagen wieder zu entfernen, sobald das Kind, insbesondere Kleinkind, aus der Kindertragschale herausgewachsen ist. Alternativ können die Stützlager an den zugeordneten Gestellholmen auch form- und/oder nur kraftschlüssig angeschlossen, insbesondere festklemmbar sein.

Des weiteren ist vorzugsweise eine Verriegelung für die Stützlager an den zugeordneten Gestellholmen des Kinderwagens vorgesehen.

Die konstruktive Ausbildung der Stützlager nach den Ansprüchen 2 und 3 ist besonders einfach hinsichtlich der Handhabung. Die Kindertragschale braucht lediglich auf den Stützlagern des Kinderwagens abgesetzt zu werden. Zur Sicherung der Kindertragschale ist es noch empfehlenswert, diese mittels eines Gurtes zu halten, so daß die Kindertragschale auf keinen Fall aus den Stützlagern herausfallen kann, und zwar nicht einmal dann, wenn der Kinderwagen umkippen sollte. Vorzugsweise ist der Haltegurt an den Stützlagern befestigt sowie in der Länge einstell- bar. Zum Zwecke der Sicherung wird der Haltegurt über die Kindertragschale, insbesondere über das Fußteil derselben hinweg unter Sicherung der Schale im Kinderwagen geführt und mittels eines herkömmlichen Schlosses verriegelt.

Nachstehend wird eine Ausführungsform eines erfindungsgemäß ausgebildeten Kinderwagens sowie einer zugeordneten Kindertragschale anhand der beigefügten Zeichnungen näher erläutert. Es zeigen:
- Fig. 1: eine Kindertragschale herkömmlicher Art als Teil des erfindungsgemäßen Systems Kinderwagen/Kindertragschale, in perspektivischer Ansicht;
- Fig. 2: ein erfindungsgemäß ausgebildeter Kinderwagen in Seitenansicht und unter schematischer Zuordnung einer Kindertragschale entsprechend Fig. 1 (strichpunktiert);
- Fig. 3: die Zuordnung der Stützlager für die Kindertragschale am Kinderwagen in perspektivischer Seitenansicht; und
- Fig. 4: einen mit Stützlager für eine Kindertragschale ausgerüsteten Kinderwagen in perspektivischer Seitenansicht.

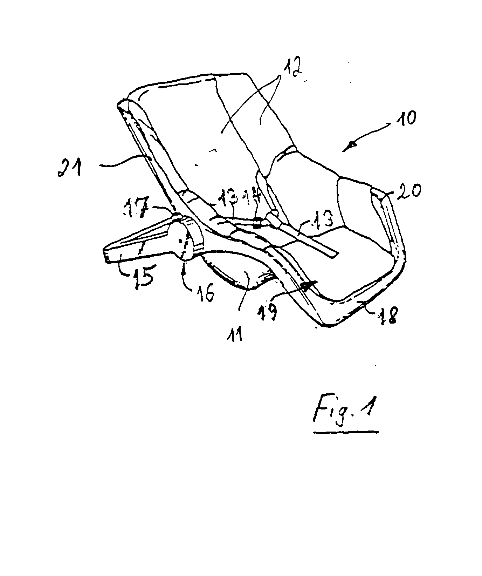

Die in Fig. 1 dargestellte Kindertragschale dient als Kindersitz und Kinderliege gleichzeitig, je nachdem in welchem Winkel die Rückenlehne zur Horizontalen eingestellt wird. Primär wird die Tragschale gemäß Fig. 1 als Kindersitz verwendet, und zwar für den Transport im Auto. Die Kindertragschale gemäß Fig. 1 ist mit der Bezugsziffer 10 gekennzeichnet. Sie besteht aus einer ergonomisch geformten Kunststoff-Hartschale 11, deren Sitzbzw. Liegeseite mit einer Polsterung 12 versehen ist. Des weiteren ist der Sitz- und Liegeseite ein Dreieck-Sicherheitsgurt 13 mit Gurtschließe 14 zugeordnet.

An beiden Seiten der Hartschale 11 ist ein Tragbügel 15 angelenkt. Der Tragbügel 15 ist aus einer etwa vertikalen Tragstellung in eine Bodenstützstellung gemäß Fig. 1 und umgekehrt verschwenkbar. Auch ist die Verschwenkung in weitere Zwischenstellungen denkbar. In Fig. 1 ist nur ein Schwenklager dargestellt und mit der Bezugsziffer 16 gekennzeichnet. Diesem Schwenklager ist noch ein Rastmechanismus zugeordnet, um den Tragbügel in vorgegebenen Winkelpositionen zu halten. Die Endrastung erfolgt jeweils durch einen mit dem Rastmechanismus wirkverbundenen Betätigungsknopf 17. Bei der Stellung gemäß Fig. 1 läßt sich die Tragschale 10 auf dem Boden abstellen, wobei die Abstützung zum einen durch den bereits erwähnten Tragbügel 15 und zum anderen durch die untere Kante 18 der Fußstütze 19 der Tragschale 10 erfolgt. Die Tragschale 10 ist nach Art eines Schalensitzes ausgebildet, d. h. mit seitlichen Stützwänden 20, 21 versehen.

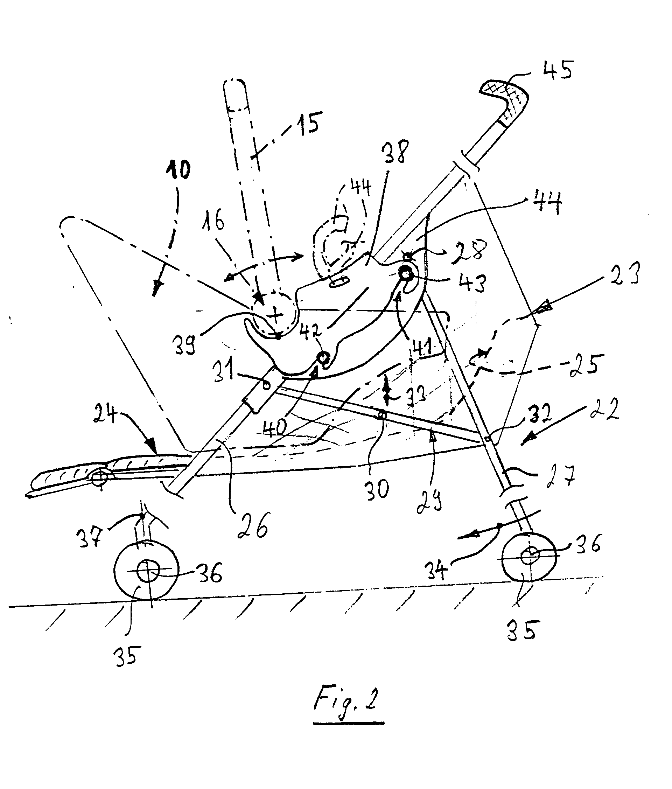

Die beschriebene Kindertragschale ist unter anderem bestimmt zur Festlegung auf dem Fahrgestell eines Kinderwagens, insbesondere zusammenklappbaren Kindersportwagens, wie er in den Fig. 2 bis 4 angedeutet ist. Dieser Kinderwagen ist in Fig. 2 mit der Bezugsziffer 22 gekennzeichnet. Das Fahrgestell dieses Kinderwagens umfaßt zwei im horizontalen Abstand voneinander und sich parallel in senkrechten Ebenen zueinander erstreckende Holmkonstruktionen, zwischen denen ein Aufsatz 23 mit einer Sitzfläche 24 und einer Rückenlehne 25 angeordnet ist. Jede Holmkonstruktion weist einen sich schräg von hinten oben nach vorne unten erstreckenden Hauptholm 26 sowie einen daran angelenkten (Gelenk 28) sich schräg nach hinten unten erstreckenden Stützholm 27 auf. Zwischen Stützholm 27 und Hauptholm 26 ist noch eine Verbindungsstrebe 29 angeordnet. Die Verbindungsstrebe 29 umfaßt zwei Strebenabschnitte, die über ein Gelenk 30 miteinander verbunden sind. Im übrigen sind die dem Gelenk 30 jeweils abgewandten Enden der Strebenabschnitte am Hauptholm 26 einerseits und am Stützholm 27 andererseits angelenkt (Gelenke 31, 32). Beim Anheben der Verbindungsstrebe 29 im Bereich der Gelenkverbindung 30 in Richtung des Pfeiles 33 klappt die Verbindungsstrebe 29 scherenartig zusammen mit der Folge, daß auch der Stützholm 27 an den Hauptholm 26 herangeklappt werden kann in Richtung des Pfeiles 34.

An den unteren Enden von Hauptholm 26 und Stützholm 27 ist jeweils ein Laufrad 35 um eine horizontale Achse 36 drehbar gelagert. Die vorderen Laufräder 36 können zusätzlich noch um eine senkrechte Achse 37 verschwenkbar gelagert sein. Da es sich diesbezüglich um eine bekannte Laufrad-Konstruktion handelt, erübrigt sich eine nähere Beschreibung derselben an dieser Stelle.

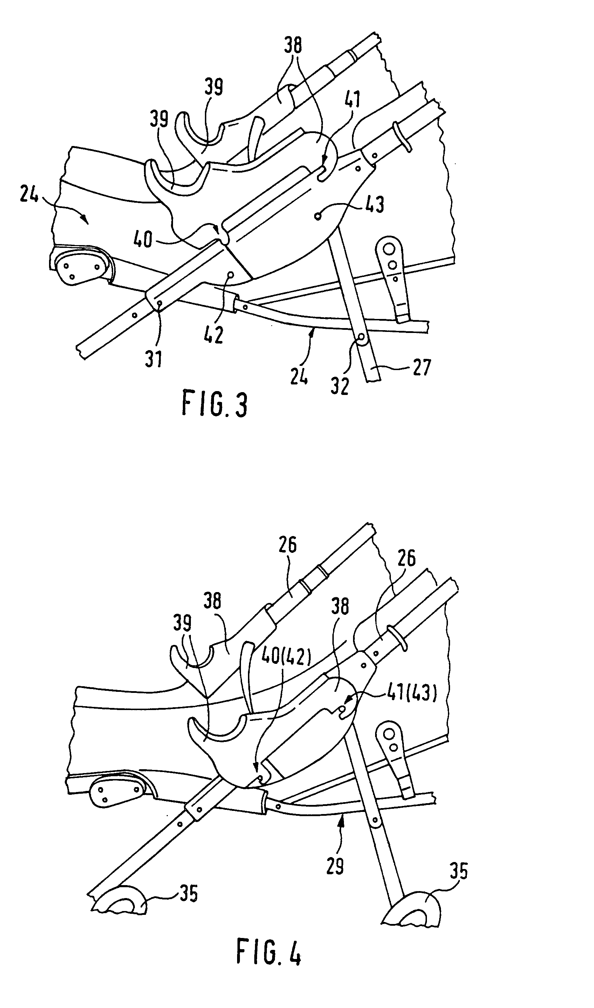

Wie insbesondere die Fig. 3 und 4 in Kombination mit Fig. 2 erkennen lassen, sind an den beiden Hauptholmen 26 jeweils im Bereich zwischen der Anlenkung 28 des Stützholms 27 einerseits und der Anlenkung 31 der Verbindungsstrebe 29 andererseits ein Stützlager 38 für die Kindertragschale 10 angeschlossen, und zwar einhak- und verrastbar. Zu diesem Zweck ist das Stützlager 38 ein auf dem jeweils zugeordneten Hauptholm 26 aufsetzbares Bauteil mit einer im montierten Zustand nach oben hin offenen, etwa halbkreisförmigen Lagerschale 39, in der das etwa zylindrisch ausgebildete Gehäuse des zugeordneten Schwenklagers 16 des Tragbügels 15 der Kindertragschale 10 entsprechend Fig. 2 plazierbar ist.

Das erwähnte Stützlager-Bauteil weist zwei Einführöffnungen 40, 41 für die Aufnahme von seitlich nach außen vorstehenden Haltezapfen 42, 43 am Hauptholm 26 bzw. an einem mit dem Hauptholm 26 fest verbundenen Beschlag 44 auf. Im montierten Zustand des Stützlagers 38 bzw. zugeordneten Bauteils liegt der zugeordnete Hauptholm 26 innerhalb einer komplementären Längsnut im Stützlager-Bauteil. Diese Längsnut ist nach unten hin offen, so daß das Stützlager-Bauteil zur Montage von oben her auf den Hauptholm 26 aufgesetzt und nach unten verschoben werden kann, bis die erwähnten Haltezapfen 42, 43 vollständig in die Einführöffnungen bzw. -schlitze 40, 41 eingeführt sind. Die obere Einführöffnung bzw. der obere Einführschlitz 41 weist noch eine sich in Richtung zum zugeordneten Hauptholm 26 hin erstreckende Fortsetzung auf, innerhalb der der zugeordnete Haltezapfen im montierten Zustand plazierbar ist, so daß das Stützlager 38 nicht ohne weiteres wieder nach oben verschoben und außer Eingriff mit den Haltezapfen 42, 43 gebracht werden kann. Um dies zu ermöglichen, muß dann das Stützlager 38 mit seinem oberen Ende zuerst nach vorne gekippt werden, bevor es nach oben in Richtung parallel zum zugeordneten Hauptholm 26 verschoben und abgenommen werden kann.

Es ist jedoch auch jede andere Art der Verriegelung bzw. Arretierung des Stützlagers 38 am zugeordneten Hauptholm 26 denkbar. Insbesondere ist es denkbar, das Stützlager 38 bzw. zugeordnete Bauteil am Hauptholm 26 mittels einer Klemmeinrichtung festzuklemmen. Bei der dargestellten Ausführungsform erfolgt die Arretierung des Stützlagers 38 am zugeordneten Hauptholm 26 rein formschlüssig. Doch wie erwähnt, ist auch eine kraftschlüssige, insbesondere form- und kraftschlüssige Fixierung des Stützlagers 38 am Hauptholm 26 und dessen Seitenbeschlag 44 denkbar.

Bei der dargestellten Ausführungsform sind die Einführöffnungen 40, 41 in Richtung parallel zum zugeordneten Hauptholm 26 nach unten hin offen, so daß bei normalem Betrieb das Stützlager 38 schwerkraftbedingt, selbsttätig in Anlage an den Haltezapfen 42, 43 gehalten wird. Damit ist das Stützlager 38 auf den Hauptholmen 26 gesichert. Es kann noch eine Verriegelung des Stützlagers 38 am Gestellholm 26 vorgesehen sein, z. B. in Form eines Verriegelungsbolzens, der in der in Fig. 2 dargestellten Position des Stützlagers 38 quer durch das zugeordnete Bauteil und den Seitenbeschlag 44 hindurchführbar ist.

Die Kindertragschale 10, die in Fig. 2 nur strichpunktiert dargestellt ist, ist zwischen den die beiden senkrechten Ebenen bzw. seitliche Begrenzung des Kinderwagens definierenden Gestellholmen 26, 27 oberhalb der Sitzfläche 24 plazierbar unter der beschriebenen Abstützung an den an den Hauptholmen 26 angeschlossenen Stützlagern 38 und gegebenenfalls unter zusätzlicher Abstützung auf der Sitzfläche 24 des Kinderwagens. Die Sitzfläche 24 verhindert vor allem ein ungewolltes Verschwenken der Kindertragschale 10 innerhalb der Lagerschale 39 nach vorne oder hinten. Zur zusätzlichen Sicherung der Kindertragschale 10 sind an den Stützlagern 38 noch Haltegurte 44 angeschlossen, die bei Bedarf über die Kindertragschale 10 hinweg unter Sicherung desselben im Kinderwagen 22 führ- und verriegelbar sind, wobei die Verriegelung in herkömmlicher Weise stattfindet.

Am oberen Ende der Hauptholme 26 sind noch Griffbügel 45 ausgebildet. Alternativ können auch die beiden oberen Enden der Hauptholme 26 durch eine Verbindungsstrebe miteinander verbunden sein, die dann zusammen mit dem Hauptholm 26 einen U-förmigen Griffbügel definiert.

Es sei noch darauf hingewiesen, daß Fig. 3 das Aufsetzen eines Stützlagers auf einen zugeordneten Gestellholm, nämlich Hauptholm 26 erkennen läßt. In Fig. 4 sind beide Stützlager 38 auf den jeweils zugeordneten Hauptholmen 26 fixiert. Der Kinderwagen ist dann bereit zur Aufnahme der Kindertragschale 10.

Die Stützlager 38 sind jeweils aus Kunststoff hergestellt.

Sie sind entfernbar, sobald das Kind aus der Kindertragschale 10 heraugewachsen ist; denn dann sind auch die Stützlager 38 entbehrlich. Der Kinderwagen läßt sich danach in herkömmlicher Weise verwenden.

### Bezugszeichenliste

- 10: Kindertragschale (Kindersitz)
- 11: Hartschale
- 12: Polsterung
- 13: Sicherheitsgurt
- 14: Gurtschließe
- 15: Tragbügel
- 16: Schwenklager
- 17: Betätigungsknopf
- 18: untere Kante
- 19: Fußstütze
- 20: seitliche Stützwand
- 21: seitliche Stützwand
- 22: Kinderwagen
- 23: Aufsatz
- 24: Sitzfläche
- 25: Rückenlehne
- 26: Hauptholm (Gestellholm)
- 27: Stützholm (Gestellholm)
- 28: Gelenk
- 29: Verbindungsstrebe
- 30: Gelenk
- 31: Gelenk
- 32: Gelenk
- 33: Pfeil
- 34: Pfeil
- 35: Laufrad
- 36: Achse
- 37: Achse
- 38: Stützlager
- 39: Lagerschale
- 40: Einführöffnung (-schlitz)
- 41: Einführöffnung (-schlitz)
- 42: Haltezapfen
- 43: Haltezapfen
- 44: Haltegurt
- 45: Griffbügel

## Patentansprüche

1. Kinderwagen, insbesondere zusammenklapp- oder -faltbarer Kindersportwagen, mit einem Fahrgestell, welches sich in zwei parallelen senkrechten Ebenen erstreckende Gestellholme (26, 27) und einen Griffbügel (45) umfaßt, und mit einem Aufsatz (23), der eine Sitzfläche (24) und eine Rückenlehne (25) aufweist,
**dadurch gekennzeichnet, daß**
an den Gestellholmen (26) jeder Seite jeweils ein Stützlager (38) für eine Kindertragschale (10) lösbar angeschlossen, insbesondere einhak- und verrastbar ist, wobei das Stützlager (38) ein auf einen Gestellholm (26) aufsetzbares Bauteil mit einer im montierten Zustand nach oben hin offenen, etwa halbkreisförmigen Lagerschale (39) ist.

2. Kinderwagen nach Anspruch 1,
**dadurch gekennzeichnet, daß** das Stützlager (38) wenigstens zwei Einführöffnungen bzw. -schlitze (40, 41) für die Aufnahme von seitlich nach außen vorstehenden Haltezapfen (42, 43) am zugeordneten Gestellholm (26) aufweist.

3. Kinderwagen nach Anspruch 2,
**dadurch gekennzeichnet, daß** die Einführöffnungen bzw. -schlitze (40, 41) für die Aufnahme der Haltezapfen (42, 43) im montierten Zustand jeweils nach unten, insbesondere schräg nach unten hin offen sind, so **daß** bei normalem Betrieb das Stützlager (38) schwerkraftbedingt selbsttätig in Anlage an den Haltezapfen (42, 43) gehalten ist.

4. Kinderwagen nach einem der Ansprüche 1 bis 3,
**dadurch gekennzeichnet, daß** die Stützlager (38) an den zugeordneten Gestellholmen (26) verriegelbar sind.

5. Kinderwagen nach einem der Ansprüche 1 bis 4,
**dadurch gekennzeichnet, daß** die Kindertragschale (10) zwischen den die beiden senkrechten Ebenen bzw. seitliche Begrenzung des Kinderwagens definierenden Gestellholmen (26, 27) oberhalb der Sitzfläche (24) plazierbar ist unter Abstützung an den an den Gestellholmen (26) angeschlossenen Stützlagern (38) und gegebenenfalls unter zusätzlicher Abstützung auf der Sitzfläche (24) des Kinderwagens (22).

6. Kinderwagen nach Anspruch 1,
**dadurch gekennzeichnet, daß** die Stützlager (38) für die Kindertragschale (10) an den Gestellholmen (26) jeder Seite form- und/oder kraftschlüssig angeschlossen, insbesondere festklemmbar sind.

7. Kinderwagen nach einem der Ansprüche 1 bis 6 mit einer Kindertragschale, **dadurch gekennzeichnet, daß** die Kindertragschale (10) einen Tragbügel (15) umfaßt, dessen Schenkel seitlich an der Kindertragschale (10) angelenkt sind, derart, **daß** der Tragbügel (15) aus einer etwa vertikalen Tragstellung in eine Bodenstützstellung und umgekehrt sowie gegebenenfalls weitere Zwischenstellungen verschwenkbar ist, wobei die Schwenklager (16) an den beiden Seiten der Kindertragschale (10) zugleich zur Abstützung derselben an den an den Gestellholmen (26) des Kinderwagens (22) befestigten Stützlagern (38) dienen.

8. Kinderwagen nach einem der Ansprüche 1 bis 7,
**dadurch gekennzeichnet, daß** an den Gestellholmen (26), oder an den Stützlagern (38) ein insbesondere hinsichtlich seiner Länge einstellbarer Haltegurt (44) angeschlossen ist, der bei Bedarf über die Kindertragschale (10) hinweg unter Sicherung derselben im Kinderwagen (22) bzw. in den Stützlagern (38) führ- und verriegelbar ist.

## Claims

1. A perambulator, more particularly a collapsible or foldable pushchair, with a chassis which comprises chassis shafts (26, 27) extending in two parallel vertical planes and a handle (45), and with a mounting (23) which has a seat (24) and a backrest (25),
**characterised in that** respective support bearings (38) for a child-carrier shell (10) are attached to the chassis shafts (26) of either side so as to be releasable, more particularly so as to be engageable therein and lockable, the support bearing (38) being a component mountable on a chassis shaft (26) with an approximately semicircular bearing shell (39) which is open upwardly in the mounted state.

2. A perambulator according to claim 1,
**characterised in that** the support bearing (38) has at least two insert openings or slots (40, 41) to accommodate holding pins (42, 43) projecting laterally outwards on the associated chassis shaft (26).

3. A perambulator according to claim 2,
**characterised in that** the insert openings or slots (40, 41) to accommodate the holding pins (42, 43) in the mounted state are each open downwardly, more particularly obliquely downwardly, so that in normal operation the support bearing (38) is automatically held through gravity in abutment against the holding pins (42, 43).

4. A perambulator according to one of claims 1 to 3,
**characterised in that** the support bearings (38) may be locked to the associated chassis shafts (26),

5. A perambulator according to one of claims 1 to 4,
**characterised in that** the child-carrier shell (10) may be placed between the chassis shafts (26, 27) defining the two vertical planes or lateral boundary of the perambulator above the seat (24), being supported on the support bearings (38) attached to the chassis shafts (26) and optionally additionally being supported on the seat (24) of the perambulator (22).

6. A perambulator according to claim 1,
**characterised in that** the support bearings (38) for the child-carrier shell (10) are attached to the chassis shafts (26) of either side in a positive and/or nonpositive manner, more particularly are capable of being fixedly clamped thereto.

7. A perambulator according to one of claims 1 to 6 with a child-carrier shell,
**characterised in that** the child-carrier shell (10) comprises a carrying handle (15), the arms of which are pivotally connected laterally to the child-carrier shell (10), in such a way that the carrying handle (15) is pivotable from an approximately vertical carrying position into a ground-supporting position and vice versa and optionally into other intermediate positions, the pivot bearings (16) on the two sides of the child-carrier shell (10) at the same time serving to support the same on the support bearings (38) secured to the chassis shafts (26) of the perambulator (22).

8. A perambulator according to one of claims 1 to 7,
**characterised in that** there is attached to the chassis shafts (26) or to the support bearings (38) a safety belt (44), adjustable particularly with respect to its length, which may be guided and locked as required across the child-carrier shell (10), securing the same in the perambulator (22) or in the support bearings (38).

## Revendications

1. Voiture d'enfant, en particulier poussette pliante ou rabattable, avec un châssis qui comporte des longerons (26, 27) s'étendant dans deux plans parallèles verticaux et un guidon (45), et avec une garniture (23) qui présente un siège (24) et un dossier (25), **caractérisée en ce qu'**une armature d'appui (38) pour une nacelle (10) est respectivement assemblée de façon amovible, peut être en particulier accrochée et encliquetée, avec les longerons (26) de chaque côté, l'armature d'appui (38) étant un composant pouvant être mis en place sur un longeron (26), avec une coque d'appui (39) à peu près en forme de demi-cercle, ouverte vers le haut à l'état de montage.

2. Voiture d'enfant suivant la revendication 1, **caractérisée en ce que** l'armature d'appui (38) présente au moins deux ouvertures et/ou fentes d'introduction (40, 41) pour recevoir des tourillons de retenue (42, 43), dépassant latéralement vers l'extérieur, sur le longeron associé (26).

3. Voiture d'enfant suivant la revendication 2, **caractérisée en ce que** les ouvertures et/ou fentes d'introduction (40, 41) pour recevoir les tourillons de retenue (42, 43) à l'état de montage sont respectivement ouvertes vers le bas, en particulier en oblique vers le bas, de sorte que, en mode de fonctionnement normal, l'armature d'appui (38) est maintenue automatiquement par la force de gravité au contact des tourillons de retenue (42, 43).

4. Voiture d'enfant suivant l'une des revendications 1 à 3, **caractérisée en ce que** les armatures d'appui (38) peuvent être verrouillées sur les longerons associés (26).

5. Voiture d'enfant suivant l'une des revendications 1 à 4, **caractérisée en ce que** la nacelle (10) peut être placée au-dessus du siège (24) entre les longerons (26, 27) définissant les deux plans verticaux et/ou la délimitation latérale de la voiture d'enfant, avec un supportage sur les armatures d'appui (38) assemblées avec les longerons (26), et éventuellement avec un supportage supplémentaire sur le siège (24) de la voiture d'enfant (22).

6. Voiture d'enfant suivant la revendication 1, **caractérisée en ce que** les armatures d'appui (38) pour la nacelle (10) sont assemblées par force mécanique et/ou d'adhérence, peuvent être en particulier bloquées, avec les longerons (26) de chaque côté.

7. Voiture d'enfant suivant l'une des revendications 1 à 6 avec une nacelle, **caractérisée en ce que** la nacelle (10) comporte un étrier de suspension (15) dont les branches s'articulent latéralement sur la nacelle (10), de sorte que l'étrier de suspension (15) peut être animé d'un mouvement de pivotement d'une position de suspension à peu près verticale dans une position d'appui au sol, et inversement, et éventuellement dans d'autres positions intermédiaires, les paliers pivotants (16) sur les deux côtés de la nacelle (10) servant simultanément à supporter cette dernière sur les armatures d'appui (38) fixées sur les longerons (26) de la voiture d'enfant (22).

8. Voiture d'enfant suivant l'une des revendications 1 à 7, **caractérisée en ce qu'**une ceinture de retenue (44), en particulier réglable en longueur, est reliée aux longerons (26) ou aux armatures d'appui (38), cette ceinture pouvant être en cas de besoin passée et verrouillée sur la nacelle (10), en bloquant cette dernière dans la voiture d'enfant (22) et/ou dans les armatures d'appui (38).
